# EUROPÄISCHE PATENTSCHRIFT

(11) **EP 3 805 569 B1**
(45) Veröffentlichungstag und Bekanntmachung des Hinweises auf die Patenterteilung: **29.11.2023**
(21) Anmeldenummer: 20201036.9
(22) Anmeldetag: 09.10.2020
(51) Int. Cl.: F04D 27/02, E02F 3/90, F04D 17/16, F04D 25/02

(54) **VERFAHREN ZUR BEEINFLUSSUNG EINES DURCH EINEN VENTILATOR ERZEUGTEN SAUG- ODER DRUCKSTROMES, ANORDNUNG ZUR DURCHFÜHRUNG DES VERFAHRENS UND VERWENDUNG DES VERFAHRENS**
METHOD FOR INFLUENCING A SUCTION OR PRESSURE FLOW GENERATED BY A FAN, ASSEMBLY FOR CARRYING OUT THE METHOD AND USE OF THE METHOD
PROCÉDÉ POUR INFLUENCER UN ÉCOULEMENT D'ASPIRATION OU DE PRESSION GÉNÉRÉ PAR UN VENTILATEUR, AGENCEMENT DE MISE EN OEUVRE DUDIT PROCÉDÉ ET UTILISATION DUDIT PROCÉDÉ

(30) Priorität: 10.10.2019 DE 102019127258
(43) Veröffentlichungstag der Anmeldung: 14.04.2021
(73) Patentinhaber: Zenner Ventilatoren GmbH, 09526 Olbernhau (DE)
(72) Erfinder: Zenner, Ulf, 09526 Olbernhau (DE)
(74) Vertreter: LS-MP von Puttkamer Berngruber Loth Spuhler

(56) Entgegenhaltungen:
- EP-A1- 0 620 323
- EP-A2- 1 997 417
- DE-A1- 19 841 791
- DE-A1-102010 060 973
- DE-T5-112014 000 083

## Beschreibung

Die Erfindung betrifft ein Verfahren zur Beeinflussung eines durch einen Ventilator erzeugten Saug- oder Druckstromes, der zum Stofftransport in einem Strömungskanal eingesetzt ist, wobei es das Ziel ist, die Verfahrensparameter den Bedingungen des Einsatzfalles des Verfahrens entsprechend zu optimieren oder zu maximieren.

Die Erfindung betrifft weiter eine Anordnung, mit der das erfindungsgemäße Verfahren ausgeführt werden kann.

Es ist bekannt, in einem Strömungskanal bewegte Luftströme, die durch einen Ventilator erzeugt sind, zum Transport fester oder flüssiger Stoffe zu nutzen. Solche Anwendungen sind allgemein bekannt in der Form der so bezeichneten Staubsauger, als fest installierte Absauganlagen, als Rohrpost oder als die so genannten Förderventilatoren. Ebenso als Saugbagger für die Ausführung von Schachtarbeiten.

Die verwendeten Ventilatoren sind mit Bezug auf den jeweiligen Einsatzfall Axial-, Radialventilatoren oder mehrstufige Ventilatorkaskaden verschiedener Bauarten. Deren Antrieb erfolgt entweder mechanisch oder mit Hilfe eines direkt verbundenen Elektromotors.

Die bekannten Ventilatoren arbeiten gewöhnlich unter Arbeitsbedingungen, denen ein Normzustand zu Grunde gelegt ist. Beispielsweise können das ein projektierter Luftdurchsatz, eine Nenngröße des Ventilators, eine Mindestleistung desselben oder eine vorgegebene Luftgeschwindigkeit im Strömungskanal sein.

Es sind Einsatzfälle für Ventilatoren bekannt, bei denen als Antrieb beispielsweise eine Brennkraftmaschine verwendet ist. Ein solcher Anwendungsfall ist ein sogenannter Saugbagger, bei dem mit einer Sauglanze Feststoffe oder Flüssigkeiten angesaugt und bis zu einem Absetzbehälter transportiert werden. Ein weiterer Anwendungsfall ist ein so genannter Förderventilator, bei dem zunächst einem Druckstrom ein zu förderndes Gut beigegeben, dasselbe dann mitgerissen und am Ende des Strömungskanals wieder abgelagert wird.

Die meisten der bekannten Einsatzfälle arbeiten in energetischer Hinsicht uneffektiv. Sie werden, sofern der Luftstrom zu Transportzwecken benutzt wird, nur zeitanteilig genutzt.

Ergeben sich beim Einsatz der Ventilatoren Unregelmäßigkeiten, beispielsweise durch Verstopfungen im Strömungskanal oder ähnlich gelagerten Änderungen der Widerstandsverhältnisse, hat dies Auswirkungen auf den Betrieb der Ventilatoren. Bei den bekannten Staubsaugern erhöht sich die Ventilatordrehzahl, sobald die Staubsaugerdüse sich irgendwo festsaugt und der Luftstrom gemindert ist. Ebenso verändert sich bei Saugbaggern die Strömung beim Ansaugen großer Objekte, Verstopfungen und dergleichen. Der Ventilator wird in diesem Fall jedoch drehzahlgeregelt betrieben. Es reduziert sich jedoch dessen Leistungsbedarf. Bei einem Förderventilator kann eine schwallartige Aufgabe des Förderguts den Widerstand im Strömungskanal schlagartig erhöhen, was wiederum zur Drehzahlerhöhung beim Ventilator führt.

Es ist schon seit längerer Zeit bekannt, dass solche instabilen Betriebsverhältnisse sich auch auf die Lebensdauer der Ventilatoren auswirken. Insbesondere, wenn Ventilatoren während des Einsatzes ständig mit stochastisch einwirkenden Widerstandsänderungen belastet sind, kann sich deren Lebensdauer durch die entstehenden Schwingungen stark verkürzen.

Wenn als Energiequelle für den Betrieb des Ventilators eine Brennkraftmaschine eingesetzt ist, was insbesondere bei mobilen Anwendungsfällen, insbesondere bei den so genannten Saugbaggern, der Fall ist, sind Widerstandsänderungen im Strömungskanal auch mit Rückwirkungen auf die Energiequelle verbunden. Die Belastung der Energiequelle führt bei dieser ebenfalls zur Verkürzung der Lebensdauer.

Insbesondere bei Anwendungsfällen, bei denen mit leistungsstarken Ventilatoren gearbeitet wird, sind Transportleistung, Zuverlässigkeit, Dauerhaftigkeit und nergieaufwand während des Betriebes auch wesentliche Kostenfaktoren. Es wurde deshalb versucht, den Betrieb von Ventilatoren durch Einflussnahme auf deren Betriebsparameter oder durch entsprechende Gestaltung von Komponenten optimal zu gestalten.

In DE 10 2010 060 971 A1 ist beispielsweise eine Ventilatorkaskade zur Verwendung in einem Saugbagger beschrieben, bei der eine mechanische Antriebslösung so ausgestaltet ist, dass die Übertragung von Schwingungen zwischen der Energiequelle und der Ventilatorkaskade weitgehend vermieden ist. Erreicht wird dies durch die Verwendung von Riementrieben und den Einsatz einer Strömungskupplung.

In DE 10 2004 042 720 A1 ist eine Anordnung für insgesamt 4 Ventilatoren in einem Saugbagger beschrieben, die mit Elektromotoren angetrieben werden und bei der einzelne Ventilatorstufen bei Bedarf zu- oder abgeschaltet werden können.

In DE 10 2014 103 604 B3 ist eine Anordnung beschrieben, nach der in einem Saugbagger sowohl eine Vakuumpumpe als auch ein Ventilator parallel geschaltet und beide elektromotorisch angetrieben sind.

In DE 30 12 171 C2 ist ein Verfahren zur Steuerung der Förderleistung eines unter Wasser arbeitenden Saugbaggers beschrieben, bei dem der Saugkopf mithilfe einer Steuerung in Abhängigkeit vom Anteil Sauggut im Förderstrom gesteuert werden kann. Auf den Förderstrom wird nicht eingewirkt.

In DE 10 2015 105 836 B3 ist ein Vorschlag für die Gestaltung einer Strömungsumkehr im Strömungskanal eines Saugbaggers gemacht, um temporäre Verschlüsse in Sauglanze oder Strömungskanal damit zu lösen und den Weiterbetrieb des Saugbaggers zu ermöglichen. Aus der DE 198 41 791 A1 ist ein Verfahren zum Fördern von Schüttgut von einer an einer Schüttung befindlichen Aufnahmestelle zu einer Abgabestelle bekannt. Ein Transportgasstrom ist in einer Förderleitung angeordnet, wobei das Schüttgut an der Aufnahmestelle mit dem Transportgasstrom angesaugt und an der Abgabestelle aus diesem ausgeschieden wird. Der Transportgasstrom wird mit einem von einem Antriebsmotor angetriebenen Verdichter erzeugt. Die Erfindung bezieht sich ferner auf eine Saug-Fördereinrichtung für Schüttgut mit wenigstens einer Förderleitung zum Fördern des Schüttgutes mittels eines Transportgasstromes. Die EP 1 997 417 A2 offenbart ein Verfahren zum Betreiben eines Staubsaugers mit einem Sauggebläse, welches durch einen Gebläsemotor angetrieben wird. Es ist eine auf den Gebläsemotor einwirkende Regeleinrichtung vorgesehen, welche als Stellgröße die Motorleistung bzw. einen, die Motorleistung beeinflussenden Parameter vorgibt und dabei den mittels des Sauggebläses erzielten Unterdruck berücksichtigt. Aus der DE 10 2010 060973 A1 ist ein Steuerungsverfahren für das Sauggebläse eines Saugbaggers bekannt, das über einen Antriebsstrang von einem Verbrennungsmotor angetrieben wird. Die Erfindung betrifft insbesondere ein Steuerungsverfahren für das Sauggebläse eines Saugbaggers, das eine im Antriebsstrang angeordnete Kupplung hat, die im Antriebsstrang einen Schlupf zulässt. Im Antriebsstrang sind eine Anfahrklappe oder eine Bypassklappe angeordnet, die einzeln oder im Verbund gesteuert werden. Die DE 11 2014 000083 T5 zeigt ein Anzeigesystem für eine Baggermaschine, das eine erste Schwenk-Zielinformation und eine zweite Schwenk-Zielinformation umfasst, die einen Betrag der Drehung des Arbeitsgeräts auf der Basis von Informationen einschließlich einer Richtung einer Zahnkante des Löffels, Informationen einschließlich einer Richtung orthogonal zur Zielebene und Informationen einschließlich einer Richtung einer zentralen Schwenkachse anzeigen. Das Anzeigesystem wählt die erste Schwenk-Zielinformation oder die zweite Schwenk-Zielinformation auf der Basis der erhaltenen ersten Schwenk-Zielinformation und zweiten SchwenkZielinformation und auf der Basis eines ersten Winkels und eines zweiten Winkels aus.

Grundsätzlich ist bekannt, dass im Fall einer Verringerung des Stoffstroms oder eines Verschlusses im Strömungskanal sowohl bei einem Saug- als auch bei einem Förderventilator der Widerstand und damit der Energiebedarf sinkt, weshalb bei den bekannten Anordnungen solcher Ventilatoren zumeist eine Drehzahlerhöhung folgt, bis den geänderten Widerstandsverhältnissen entsprechend erneut ein energetisches Gleichgewicht erreicht ist. Das heißt, für den Moment einer Widerstandserhöhung sinkt der Leistungsbedarf des Ventilators und umgekehrt.

Aus diesem Effekt ergibt sich auch, dass sich bei einer Verringerung des Widerstandes im Strömungskanal der Arbeitspunkt des Ventilators auf dessen Kennlinie in Richtung zu einer Erhöhung der Druckdifferenz im Strömungskanal bei zugleich sich verringerndem Energiebedarf verschiebt.

Der beschriebene Effekt ist insbesondere bei Saugbaggern nachteilig, die mit einem Luftstrom arbeiten. Diese, mit einer Sauglanze arbeitenden Geräte sollen vor allem bei Bodenverhältnissen eingesetzt werden, die durch verlegte Leitungen, Kabel und dergleichen und unbekannten Zusammensetzungen des Baggergutes charakterisiert sind. Sie sollen dabei schonend anstelle der früher üblichen Handschachtung arbeiten und trotzdem eine deutlich höhere Leistung erreichen.

Die geschilderten Bedingungen führen, anders als bei Saugbaggern, die bei der Rohstoffgewinnung eingesetzt werden, zu stochastisch auftretenden Ereignissen, die alle Komponenten dieser Saugbagger erheblich beanspruchen. Besonders belastet sind dabei die Ventilatoren sowie die Antriebsstränge bis hin zu den als Antrieb verwendeten Brennkraftmaschinen. Die Folge sind hohe Instandhaltungskosten und verminderte Verfügbarkeit dieser Geräte. Es besteht also eine Notwendigkeit, auf unerwartete Ereignisse während des Baggerprozesses vorbereitet zu sein, bestimmte Ereignisse durch entsprechende Anpassung der Betriebsparameter auszugleichen und wenn möglich die Arbeitsleistung solcher Saugbagger zu optimieren.

Es ist Aufgabe der vorliegenden Erfindung, ein Verfahren für den Betrieb von Ventilatoren vorzuschlagen, mit dem das Betriebsverhalten der Ventilatoren bei Änderung der Betriebsparameter und/oder der Wirkungsgrad undloder die Zuverlässigkeit und/oder die Betriebs- beziehungsweise Instandhaltungskosten im jeweils positiven Sinne beeinflusst werden können.

Es ist ebenso Aufgabe der vorliegenden Erfindung, eine für die Anwendung des Verfahrens geeignete Anordnung für einen Ventilator vorzuschlagen.

Nach der Erfindung wird ein Verfahren nach Anspruch 1 für den Betrieb von Ventilatoren, die einen Saug- oder Druckstrom zum Transport von Stoffen erzeugen, ausgeführt, bei dem auf den Arbeitspunkt des Ventilators der Gestalt eingewirkt wird, dass ein Maximum oder ein Optimum an Stofftransport bei gleichzeitig optimiertem Einsatz an Antriebsenergie erreicht wird und/oder stochastisch auftretende Widerstandsänderungen durch Anpassungen der Parameter des Saugstroms weitgehend ausgeglichen oder extreme Widerstandsänderungen, wie ein Verschluss des Strömungskanals, weitgehend vermieden werden können.

Nach der Erfindung wird eine Anordnung nach Anspruch 4 für den Betrieb von Ventilatoren vorgeschlagen, die einen Saug- oder Druckstrom zum Transport von Stoffen erzeugt und deren Komponenten geeignet sind, die Verfahrensschritte des erfindungsgemäßen Verfahrens auszuführen.

In der nachstehenden Erfindungsbeschreibung haben die verwendeten Begriffe für die Merkmale der Erfindung folgende Bedeutung:

Ventilator- ist ein rotierender Druckstromerzeuger für das Medium Luft, das in einem Strömungskanal bewegt wird und ein- oder mehrstufig ausgeführt sein kann.

Strömungskanal - ist ein Leitungsabschnitt, in dem das vom Ventilator verdichtete Medium Luft sowie ein Anteil an Feststoffen bewegt wird.

Saugstrom - ist ein Luftstrom, der vom Ventilator aus dem Strömungskanal angesaugt wird. Der Strömungskanal ist in diesem Fall mit der Ansaugöffnung des Ventilators verbunden.

Druckstrom - ist ein Luftstrom, der vom Ausgang des Ventilators in den Strömungskanal hinein geblasen wird. Der Strömungskanal ist in diesem Fall mit der Ausblasöffnung des Ventilators verbunden.

Elektrischer Antrieb - ist ein mit elektrischer Energie betriebener Motor, der mit dem Ventilator gekoppelt ist.

Steuerung - ist eine steuerbare elektrische/elektronische Einheit, die in der Lage ist, dem elektrischen Antrieb die notwendige Energiemenge bereitzustellen.

Umrichter - ist eine steuerbare elektrische/elektronische Einheit, die in der Lage ist, von einer Stromquelle erhaltene Energiemengen so umzuformen, dass eine in Spannung, Spannungsverlauf und Stromstärke angepasste Energiemenge dem elektrischen Antrieb bereitgestellt wird.

Generator - ist ein Stromerzeuger, der mit einem Antriebsorgan gekoppelt ist und die Antriebsenergie in elektrische Energie umwandelt.

Antriebsorgan - ist eine beliebige Kraftmaschine, die den Generator antreibt.

Kraftmaschine - ist eine Maschine, die mit fremd erzeugter oder mit intern erzeugter Energie arbeitet, wie eine Brennkraftmaschine, eine Dampfmaschine, eine Dampfturbine, eine Gas- oder eine Wasserturbine.

Dieselelektrisches Prinzip - ist das Synonym für eine Anordnung, bestehend aus einer Kraftmaschine, einem an diese angeschlossenen Generator, einem über elektrische Leitungen an den Generator angeschlossenen elektrischen Antrieb und einem daran gekoppelten Ventilator, wobei diese Anordnung ausschließlich dem Antrieb des Ventilators dient. Das verwendete Verbrennungsverfahren ist dabei nicht auf das Dieselverfahren beschränkt.

Betriebspunkt - ist im Arbeitsdiagramm eines Ventilators jener Punkt im Kennfeld des Ventilators, der sich durch Betriebskenngrößen, wie Leistungsbedarf, Drehzahl, Luftdurchsatz oder Differenzdruck bestimmen lässt.

Widerstand - bezeichnet die Summe aller Strömungs- und Reibungswiderstände, aus denen sich für einen Ventilator in der betrachteten Gesamtanordnung ein Betriebspunkt ergibt. Das heißt, es besteht im jeweiligen Betriebspunkt ein Gleichgewicht zwischen der zugeführten und der aufgrund der Widerstände verbrauchten Energie.

Nach der Erfindung wird zunächst davon ausgegangen, dass das erfindungsgemäß angewendete Verfahren es ermöglicht, den Betriebspunkt des Ventilators durch Einflussnahme auf bestimmte Betriebskenngrößen auf der vorhandenen Ventilatorkennlinie beziehungsweise im Ventilatorkennfeld gezielt zu verschieben, um einen weitgehend gleichmäßigen und störungsfreien Betrieb des Ventilators zu erreichen.

Im Stand der Technik werden Ventilatoranordnungen ausgeführt, deren Kenngrößen in Abhängigkeit von einer zu lösenden Aufgabe projektiert wurden. Daraus ergeben sich dann die Ventilatorkennlinie und der normalerweise durch den Ventilator erreichte Betriebspunkt.

Im praktischen Einsatz ergeben sich jedoch stochastisch verteilte Einflüsse, wie beispielsweise Änderungen der im Strömungskanal geförderten Stoffmenge, Änderungen der Strömungsgeschwindigkeit sowie daraus folgende Widerstandsänderungen im Strömungskanal sowie Rückwirkungen zum Ventilator.

Sobald sich die Strömung im Strömungskanal ändert und sich dabei von einem Maximalwert in Richtung zu geringeren Werten des durch den Ventilator zu überwindenden Widerstands entwickelt, sinkt zugleich der Leistungsbedarf des Ventilators. Teilweise wird eine Verringerung des Widerstands mit einer Erhöhung der Ventilatordrehzahl kompensiert, wie dies von Staubsaugern bekannt ist.

Durch eine solche Erhöhung der Drehzahl erhöht sich zunächst der im Strömungskanal wirkende Differenzdruck Δp. Das bedeutet, der Betriebspunkt des Ventilators verschiebt sich vom normalerweise benutzten Betriebspunkt in einen Bereich der Ventilatorkennlinie, in dem diese flacher verläuft. In diesem Betriebspunkt benötigt der Ventilator weniger Energie.

Nach der Erfindung wird in einem solchen Fall mehr Antriebsenergie zugeführt, als sich aus der Ventilatorkennlinie als notwendig ergibt. Durch diese Maßnahme wird eine Erhöhung des Differenzdrucks Δp im Strömungskanal erreicht, wodurch auf im Strömungskanal vorhandene Verstopfungen eine erhöhte Saugkraft wirkt. Diese Verstopfungen werden durch den höheren Differenzdruck beschleunigt und verlassen den Strömungskanal nach einer kürzeren Zeitspanne oder sie lösen sich aufgrund innerer Bewegungsabläufe sogar auf.

Nach der Erfindung wird also über die Steuerung der Antriebsenergie für den elektrischen Antrieb eine gleichmäßigere Strömung des Sauggutes im Strömungskanal erreicht und Verstopfungen über die ständig einwirkenden Kräfte vermieden.

Diese Verfahrensweise lässt sich erfindungsgemäß mit einem Ventilator realisieren, dem ein regelbarer elektrischer Antrieb die notwendige Antriebsenergie liefert und dessen Energiezufuhr über eine Steuerung den Erfordernissen entsprechend angepasst wird. Zusätzlich wird über wenigstens einen Sensor ein für die Strömung im Strömungskanal charakteristischer Messwert ermittelt und dessen Betrag der Steuerung mitgeteilt. Die Steuerung stellt dem elektrischen Antrieb dann die jeweils erforderliche Energiemenge zur Verfügung, damit der Ventilator die benötigten Betriebspunkte sicher erreichen kann.

Die gleiche Verfahrensweise lässt sich bei einem Ventilator anwenden, der ohne Anwendung des dieselelektrischen Prinzips mechanisch mit einem Antrieb, beispielsweise mit einer Brennkraftmaschine, gekoppelt ist. Die Steuerung erarbeitet in diesem Fall Steuergrößen für den Antrieb. Dieser Fall ist nicht Teil der Erfindung.

Die beschriebene Anordnung kann durch verschiedene Maßnahmen auf vorteilhafte Weise weiter ausgestaltet werden.

Die für die Strömung im Strömungskanal charakteristischen Messwerte können die Druckdifferenz im Strömungskanal, die Geschwindigkeit des Stoffstromes im Strömungskanal oder die Geschwindigkeit des Trägermediums Luft am Ende des Strömungskanals sein. Die Erfassung dieser Kennwerte kann mithilfe von Sensoren, die aus dem Stand der Technik bekannt sind, erfolgen.

Es ist auch möglich, Messwerte zweiter Ordnung, die dennoch von den Verhältnissen im Strömungskanal abhängig sind, zu nutzen. Hierzu gehören die Drehzahl des Ventilators, die Strom- oder Leistungsaufnahme des elektrischen Antriebs oder das an der Antriebswelle vorhandene Drehmoment

Dem elektrischen Antrieb oder dem damit gekoppelten Ventilator kann ein Drehzahlsensor zugeordnet werden, damit festgestellt werden kann, ob die durch die Steuerung ermittelten Betriebskennwerte auch erreicht werden.

Durch eine Kombination der Messwerte aus dem Strömungskanal und der Messwerte des Drehzahlsensors kann eine Nachjustierung der Betriebsparameter des Ventilators erreicht werden.

Es ist möglich, die über den elektrischen Antrieb zugeführte Energiemenge auf den Wert einzustellen, der dem Leistungsbedarf im nominellen Betriebspunkt entspricht. Dies ist insbesondere dann von Vorteil, wenn ein Ventilator mit einer endlichen Energiemenge versorgt wird und zusätzliche Energie nicht zur Verfügung steht.

Es ist ebenso möglich, dem elektrischen Antrieb eine größere Energiemenge zuzuführen, diesen über den bloßen Ausgleich der Widerstandsänderungen hinaus zu einer höheren Drehzahl zu steuern und damit den Differenzdruck Δp zusätzlich zu erhöhen.

Eine weitere erfindungsgemäße Ausgestaltung des Verfahrens besteht darin, eine Steuerung einzusetzen, in der bestimmte charakteristische Abläufe im Strömungskanal hinsichtlich des Werteverlaufs vordefiniert abgespeichert sind, und durch einen Soll-Ist-Vergleich auf der Grundlage der gespeicherten und gemessener Werte Betriebsparameter einzustellen, die üblicherweise zu einer Lösung des Problems beitragen.

Es ist ebenso möglich, für den Fall nicht zu lösender Probleme Steuerungsroutinen abzuspeichern, die, beispielsweise bei einem zum Stillstand gekommenen Stoffstrom, diesen wieder lösen können.

Weiterhin ist es möglich, in Abhängigkeit von den Eigenschaften des zu fördernden Sauggutes eine energetische Optimierung der Betriebskennwerte der verwendeten Ventilatoranordnung der Gestalt vorzunehmen, dass beispielsweise bei einem leicht zu lösenden Sauggut der Betriebspunkt des Ventilators so eingestellt wird, dass bezogen auf den Energieeinsatz ein maximaler Förderstrom erzielt wird.

Erfindungsgemäß wird die benötigte elektrische Energie durch eine Kraftmaschine mit angekoppeltem Generator erzeugt, und optional kann die Steuerung auch Steuerungsaufgaben für diese Komponenten übernehmen.

Um die oben beschriebenen Steuerungsmöglichkeiten unabhängig von der bereitgestellten elektrischen Energie nutzen zu können, kann die Steuerung mit einem so genannten Umrichter zusammenwirken. Dabei wird zunächst über eine Gleichrichterschaltung eine Gleichspannung erzeugt, die dann über eine Umrichterstufe unter Beeinflussung durch Steuerbefehle die Antriebsenergie für den elektrischen Antrieb erzeugt.

Erfindungsgemäß ist das Ver-fahren so ausgestaltet, dass bei einem im Übrigen ausbilanzierten Energiehaushalt in Phasen erhöhten Widerstands im Strömungskanal durch den Generator erzeugte elektrische Energie zwischengespeichert wird. Dafür ist der Anordnung ein Energiespeicher zugeordnet. Unregelmäßigkeiten beim Betrieb des Ventilators können so ohne den Energieeinsatz insgesamt zu erhöhen ausgeglichen werden.

Das Verfahren kann außerdem mit einem in der Steuerung abgelegten Befehlssatz ein schonendes Anfahren des Ventilators ausführen, was insbesondere bei Ventilatoren hoher Leistung, wie in Saugbaggern, notwendig ist.

Die für die Realisierung des erfindungsgemäßen Verfahrens benutzte Anordnung besteht wenigstens aus einem Strömungskanal, der mit wenigstens einem einen Saugstrom oder einem einen Druckstrom erzeugenden Ventilator in Verbindung steht.

Der Ventilator wird über einen elektrischen Antrieb angetrieben. Die notwendige Antriebsenergie wird durch eine Steuerung bereitgestellt, gesteuert oder geregelt.

Die Steuerung ist mit einer Stromquelle verbunden und kann dieser nach Bedarf die erforderlichen Energiemengen entnehmen.

Ein Sensor ermittelt im Strömungskanal geeignete Messwerte, aus denen die Steuerung Kenngrößen für die dem Ventilator notwendigerweise zur Verfügung zu stellenden Energiemengen ermittelt und diese Energiemengen sodann bereitstellt.

Der Strömungskanal ist je nach Ausgestaltung der Anordnung mit einem Saugrohr oder einem Fülltrichter ausgestattet. Ferner kann eine Einrichtung angeordnet sein, durch die über ein Fallrohr ein Behälter mit dem Sauggut gefüllt werden kann.

Es ist bei Verwendung eines einen Druckstrom erzeugenden Ventilators außerdem möglich, den Strömungskanal mit einem offenen Ausgang auszuführen und das transportierte Sauggut auszuwerfen.

Die Steuerung kann die Funktionen eines Umrichters ausführen. Dadurch kann sie eingangsseitig an die Bedingungen vorhandener Stromquellen angepasst werden, während sie ausgangsseitig in Abstimmung mit dem verwendeten elektrischen Antrieb angepasste Energiemengen für diesen bereitstellt.

Erfindungsgemäß ist die Anordnung durch eine Speichereinheit für elektrische Energie erweitert. Damit kann in Phasen einer Überversorgung Energie zwischengespeichert werden, die bei zeitweiliger Unterversorgung wieder verfügbar ist. Dies ist insbesondere von Bedeutung, wenn die Energieversorgung mit einem Aggregat mit begrenzter Leistungsfähigkeit, beispielsweise über eine Brennkraftmaschine bei mobilem Einsatz, erfolgen muss.

Die Erfindung wird nachstehend anhand von Ausführungsbeispielen und Zeichnungen näher erläutert. Es zeigen:

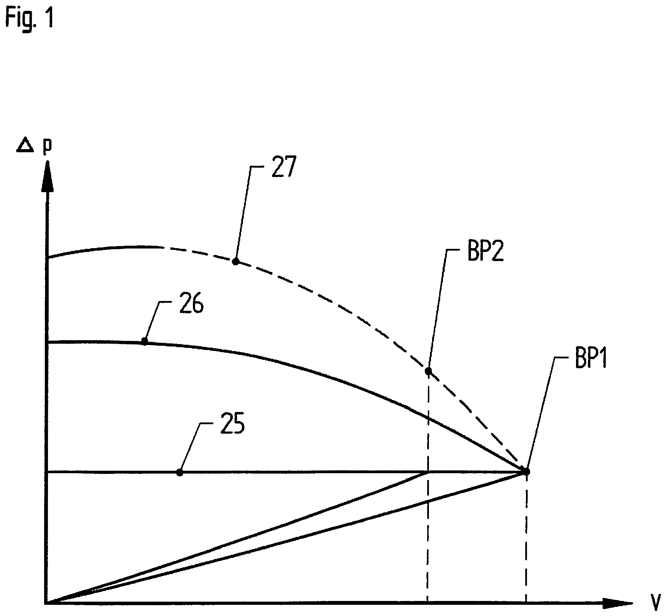

Fig.1 - Eine schematische Darstellung der Betriebsregime eines Ventilators bei Anwendung des erfindungsgemäßen Verfahrens als Diagramm.
Fig. 2 - Eine schematische Darstellung der bei der Durchführung des erfindungsgemäßen Verfahrens eingesetzten Anordnung.

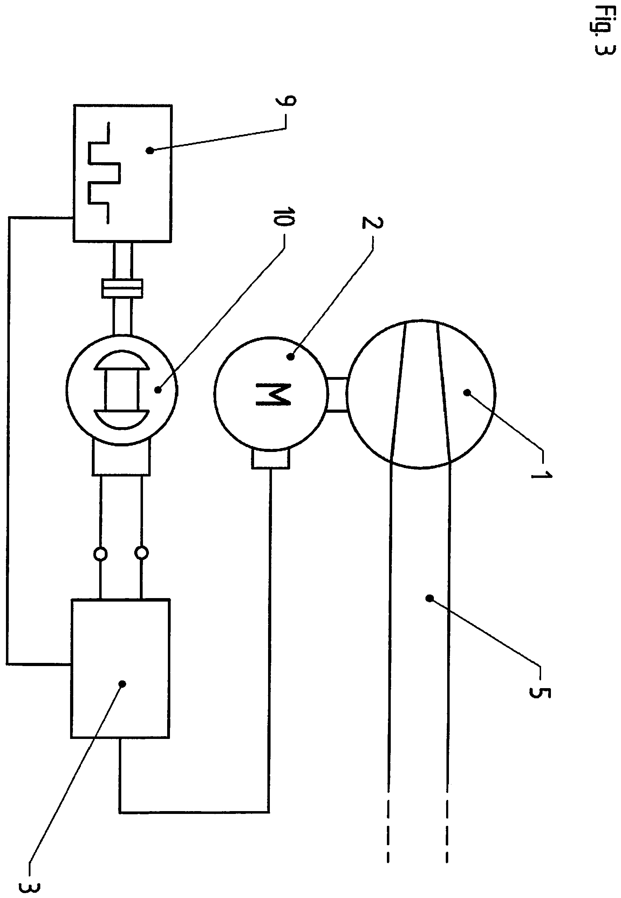

Fig. 3 - Eine schematische Darstellung der Anordnung gemäß Fig. 2 mit einer zusätzlich angeordneten Energieerzeugungsanlage, bestehend aus Brennkraftmaschine und Generator.

Ein Ventilator **1** wird von einem elektrischen Antrieb **2** angetrieben. Die erforderliche elektrische Energie wird dem elektrischen Antrieb **2** durch eine Steuerung **3** in einer Form geliefert, die es ermöglicht, dass der Ventilator **1** seine Solldrehzahl und damit den Luftdurchsatz erreicht, der für die entsprechende Anordnung vorgesehen ist.

Die Steuerung **3** verfügt dazu über leistungselektronische Bausteine **7,** die hinsichtlich Spannung, Stromstärke und falls nötig hinsichtlich Kurvenform die erforderlichen Energiemengen an den elektrischen Antrieb **2** liefern.

Die leistungselektronischen Bausteine **7** sind so dimensioniert, dass sie mehr als die projektierte Leistung an den elektrischen Antrieb **2** liefem können.

Die Steuerung **3** ist über eine Leitung **12** mit einem Sensor **4** verbunden, der im Strömungskanal **5** der Anordnung positioniert ist. Der Sensor **4** liefert Messwerte über den im Strömungskanal **5** erzeugten Massestrom. Anhand der gelieferten Messwerte kann die Steuerung **3** Informationen darüber gewinnen, wie die Strömungsverhältnisse und/oder die Widerstandsverhältnisse im Strömungskanal **5** sind. Weichen die gemessenen Werte von Sollwerten ab, kann die Steuerung **3** an die leistungselektronischen Bausteine Informationen überleiten, nach deren Erhalt durch diese die erforderlichen Energiemengen für den elektrischen Antrieb **2** angepasst werden.

Mit den erhaltenen Energiemengen erreicht der Ventilator **1** einen projektierten Arbeitspunkt **BP1,** der der Schnittpunkt aus der Nennleistungs- **25** und der Ventilatorkennline ist, und einen entsprechenden Wert für den im Strömungskanal **5** entstehenden Differenzdruck.

Saugt die Anordnung beim Betrieb aufgrund des anliegenden Differenzdrucks Masse an, steigt dadurch der Differenzdruck und der Ventilator erreicht einen Betriebspunkt **BP2.** Um diesen pendelt der Differenzdruck im Strömungskanal **5** als Folge der sich zufällig ändernden Verhältnisse beim Ansaugen des Sauggutes, der Größe der angesaugten Partikel, und der Zusammensetzung des Gemischs des Sauggutes.

Bedingt durch die Verschiebung der Kennlinie **27** des Ventilators **1** wird der Betriebspunkt **BP2** jedoch mit einer geringeren Antriebsleistung erreicht. Dadurch wird einerseits die Saugleistung vermindert, andererseits jedoch auch Antriebsenergie eingespart.

Nach der Erfindung wird die scheinbar eingesparte Energiemenge dafür eingesetzt, die Drehzahl und damit die Leistung des Ventilators **1** zusätzlich zu erhöhen. Dabei steigt zunächst der Differenzdruck Δp und die Saugkraft im Strömungskanal **5** erhöht sich. Der Differenzdruck sorgt dabei für eine gleichmäßige Strömung im Strömungskanal **5** und bewirkt außerdem, dass das Sauggut sich nicht festsetzen und den Strömungskanal verstopfen kann. Ereignisse, die den Saugvorgang negativ beeinflussen, Unterbrechungen notwendig machen und erforderliche Reinigungsarbeiten entfallen. Gleichzeitig werden der Ventilator **1** und der elektrische Antrieb **2** schonender betrieben und damit deren Zuverlässigkeit erhöht.

Das im Strömungskanal **5** geförderte Sauggut **8** ist in Abhängigkeit von der zugeführten Menge, dem prozentualen Anteil am Saugstrom, der Größenverteilung der Partikel des Saugguts **8** im an sich kontinuierlichen Saugstrom stochastisch verteilt. Daraus ergeben sich Widerstandsänderungen mit entsprechenden Rückwirkungen auf den Ventilator **1** und den elektrischen Antrieb **2.** Ein großer Durchsatz an Sauggut **8** vermindert den Saugstrom und erhöht damit den Widerstand. Daraus ergeben sich zunächst ein verminderter Energiebedarf für den Ventilator **1** und, sofern das Betriebsverhalten des elektrischen Antriebs **2** dies zulässt, eine Erhöhung der Ventilatordrehzahl.

Kommt die erfindungsgemäße Anordnung in einem Saugbagger zum Einsatz, ergeben sich darüber hinaus weitere Einflussgrößen aus der Bodenbeschaffenheit, dem Einsatz der Sauglanze und gegebenenfalls aus Einflussgrößen weiterer im Strömungskanal **5** vorhandener Komponenten.

Insbesondere treten die Einflussgrößen in stochastischer Verteilung auf, weshalb der Ventilator **1** und der elektrische Antrieb **2** ständig wechselnden Belastungen ausgesetzt sind.

Nach der Erfindung wird dem elektrischen Antrieb **2** stets die gleiche Energiemenge zugeführt. Dazu wird eine Steuerung **3** eingesetzt, die die notwendige Energiemenge bereitstellt.

Der elektrische Antrieb **2** ist so ausgelegt, dass er drehzahlvariabel betrieben werden kann. Das heißt, der elektrische Antrieb **2** ist so ausgelegt, dass er gemeinsam mit dem angetriebenen Ventilator **1** in der Lage ist, bei höheren Widerstandswerten im Strömungskanal **5** seine Drehzahl zu erhöhen, bis der Widerstandswert wieder den gleichen Betrag hat, wie die zugeführte Energiemenge und somit das energetische Gleichgewicht wieder erreicht ist. Um das zu erreichen, arbeitet der elektrische Antrieb **2** im Verbund mit einer Steuerung **3.**

Die Steuerung **3** ist in der Lage, dem jeweiligen Arbeitsregime des Ventilators entsprechend die erforderlichen Energiemengen zur Verfügung zu stellen.

Erfindungsgemäß wird in einem solchen Fall dem elektrischen Antrieb **2** über Befehle der Steuerung **3** mehr Energie zugeführt, als zur Erhaltung eines Gleichgewichtszustandes erforderlich.

Das bedeutet, der Ventilator **1** wird von seinem nominellen Betriebspunkt **BP1** zu einem Betriebspunkt **BP2** gesteuert. Der Ventilator **1** läuft mit höherer Drehzahl und der Differenzdruck Δp im Strömungskanal **5** erhöht sich.

Durch den erhöhten Differenzdruck kann im Strömungskanal **5** eine erhöhte Saugkraft wirken und eventuell fest sitzendes Sauggut kann mobilisiert werden.

Die erfindungsgemäße Lösung besteht also darin, dass gegenüber einem Gleichgewicht zwischen der durch den elektrischen Antrieb **2** geleisteten Arbeit und der Summe der Widerstände in der Anordnung mehr Energie bereitgestellt wird und der Differenzdruck im Strömungskanal **5** über die zusätzliche Erhöhung der Ventilatorleistung gesteigert wird.

Um dies zu erreichen, ist es zweckmäßig, mit einem Sensor **4** im Strömungskanal **5** die Situation zu überwachen. Mögliche Messwerte sind dabei die Druckdifferenz gegenüber der Umgebung, die Strömungsgeschwindigkeit des Mediums Luft oder die Fördergeschwindigkeit des Saugguts **8.**

Es ist ebenso möglich, Werte, wie den Leistungsbedarf, den Strombedarf oder das Antriebsdrehmoment als Messgrößen zu erfassen und diese der Steuerung **3** zu übermitteln.

Der Sensor **4** übermittelt die Messwerte an die Steuerung **3.** Diese kann daraus Steuerbefehle ableiten und die bereitzustellende Energiemenge anpassen.

Eine vorteilhafte Ausgestaltung der Steuerung **3** besteht darin, dass diese mit den erhaltenen Messwerten einen Soll-Ist-Vergleich ausführt und die Energiemenge auf der Grundlage dieses Vergleiches bestimmt.

Eine weitere vorteilhafte Ausgestaltung der Steuerung **3** besteht darin, die Messwerte des Sensors **4** kontinuierlich zu erfassen und die erhaltenen Werte mit in der Steuerung **3** abgespeicherten Werteverläufen zu vergleichen. Auf der Grundlage solcher Vergleiche sind in der Steuerung **3** Steuerbefehle abgespeichert, die aufgerufen werden können, um bestimmte wiederkehrende Ereignisse, wie überhöhte Konzentrationen an Sauggut, Verstopfungen und dergleichen, mithilfe angepasster Arbeitsroutinen des Ventilators zu vermeiden oder zu beseitigen.

Es ist ebenso möglich, die Messwerte mehrerer im Strömungskanal **5** angeordneter Sensoren zu einer Auswertung heranzuziehen.

Weiterhin ist es möglich, unter Einbeziehung der Messwerte eines oder mehrerer Sensoren den Anlauf der Kombination aus elektrischem Antrieb **2** und Ventilator **1** aus dem Stillstand so zu steuern, dass beide Komponenten schonend hochgefahren werden. Ein weiterer Aspekt ist eine energiesparende Startphase.

Nach dem oben beschriebenen Prinzip ist ein Verfahren, bei dem anstelle eines Saug- ein Druckstrom zum Einsatz kommt und eine entsprechend angepasste Anordnung ebenfalls ersetzbar.

Ein einen Druckstrom erzeugender Ventilator **17** wird von einem elektrischen Antrieb **18** angetrieben. Die Antriebsenergie wird durch eine Steuerung **19** bereitgestellt, die die benötigten Energiemengen aus einer Stromversorgung **23** bezieht. Über eine Leitung **24** ist die Steuerung **19** mit dem Sensor **4** verbunden und erhält von diesem Messsignale. Bei entsprechender Auslegung kann die Steuerung **19** leistungselektronische Bausteine **22** enthalten und als Umrichter arbeiten. Die Zuordnung eines Energiespeichers **21** ist ebenfalls möglich.

Um die notwendige Energiemenge bereitstellen zu können, ist es notwendig, dass die Steuerung **3** in der Lage ist, leistungselektronische Bausteine **7** anzusteuern. Insofern kann die Steuerung **3** integraler Bestandteil einer Baueinheit sein, die allgemein als Umrichter bezeichnet wird.

Ein solcher Umrichter kann die benötigte Energie aus einem Versorgungsnetz entnehmen.

Es ist ebenso möglich, bei einer Verwendung der erfindungsgemäßen Baueinheit in mobilen Geräten eine ohnehin vorhandene Brennkraftmaschine **9** mit einem Generator **10** auszurüsten und die für den Betrieb des Ventilators **1** erforderliche Energie von diesem zu beziehen.

Die Steuerung **3** kann in einem solchen Fall auch die Steuerung des Generators **10** und/oder die Steuerung der Brennkraftmaschine **9** mit übernehmen.

Im Fall der Bereitstellung der erforderlichen Energie durch eine Brennkraftmaschine **9** ist üblicherweise das Gesamtsystem energetisch ausbilanziert. Das erfindungsgemäße Verfahren kann in einem solchen Fall nur innerhalb der vorhandenen Grenzen wirken.

Eine vorteilhafte Ausgestaltung des Verfahrens kann deshalb vorsehen, dass bei einem kontinuierlichen Betrieb von Brennkraftmaschine **9** und Generator **10** ein vorhandenes Überangebot an Energie einem Energiespeicher **11** zugeführt wird. Ergibt sich beim weiteren Betrieb der Anordnung die Notwendigkeit, eine höhere als die bilanzierte Energiemenge bereitzustellen, kann diese dem Energiespeicher **11** wieder entnommen werden.

Das erfindungsgemäße Verfahren ermöglicht es also, einen Ventilator **1** über den antreibenden elektrischen Antrieb **2** so zu betreiben, dass über die Energiezufuhr die Leistungskennwerte des Ventilators **1** so beeinflusst werden, dass bei geringer werdenden Widerständen in der Anordnung über den Ventilator **1** der Differenzdruck Δp erhöht wird.

Das erfindungsgemäße Verfahren hat also den Vorteil, dass es Möglichkeiten schafft, den Betrieb eines Ventilators **1** zu optimieren, damit ein Saug- oder Druckstrom in einem Strömungskanal **5** möglichst gleichmäßig gefördert werden kann. Ein weiterer Vorteil des erfindungsgemäßen Verfahrens kann darin bestehen, dass der Energiebedarf bei Anwendung des Verfahrens gegenüber Lösungen aus dem Stand der Technik gesenkt wird.

Die zur Durchführung des erfindungsgemäßen Verfahrens verwendete Anordnung besteht wenigstens aus einem Strömungskanal **5,** einem Ventilator **1,** dem ein elektrischer Antrieb **2** angekoppelt ist, einer Steuerung **3** und einem Sensor **4** zur Ermittlung von Parametern des Luftstroms im Strömungskanal **5.**

Hinzu kommen nicht erfindungsnotwendige Elemente, wie ein Saugrohr **13,** mit dem zu fördernde Stoffe **14** angesaugt werden, und ein Abscheider mit einem Fallrohr **15** und einem Auffangbehälter **16.**

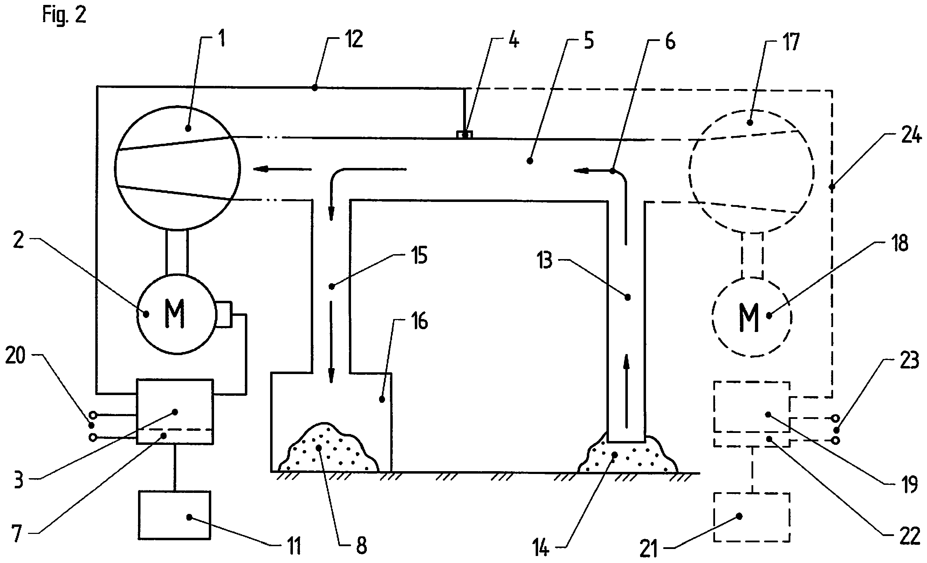

Ebenso kann, wie in Fig. 2 schematisiert dargestellt, anstelle des einen Saugstrom erzeugenden Ventilators **1** ein einen Druckstrom erzeugender Ventilator **17** mit angekoppeltem elektrischen Antrieb **18,** einer Steuerung **19** und einer Anschlussmöglichkeit an eine Stromversorgung **20** angeordnet sein.

Im Strömungskanal **5** ist ein Sensor **4** angeordnet, der Parameter des Luftstroms an die Steuerungen **3** oder **19** übermittelt.

Die Steuerung **3, 19** ermittelt aus den erhaltenen Messwerten Steuerkenngrö-ßen für bereitzustellende Energiemengen und stellt diese bereit.

Die Steuerung **3, 19** arbeitet mit leistungselektronischen Bausteinen **7** als Umrichter, um dem Leistungsbedarf des elektrischen Antriebs **2, 18** sowie des Ventilators **1** entsprechende Energiemengen bereitstellen zu können.

Die Anordnung kann in einer bevorzugten Ausführungsform für mobil ersetzbare Geräte erweitert sein. Erfindungsgemäß ist zusätzlich eine Brennkraftmaschine **9** angeordnet, die wiederum mit einem Generator **10** gekoppelt ist. Die für den Betrieb des Ventilators **1** erforderliche Energie wird nach dem dieselelektrischen Prinzip durch die Anordnung selbst erzeugt.

Diese Anordnung kann außerdem der Gestalt erweitert werden, dass die Steuerung **3** auch Steuerfunktionen für die Brennkraftmaschine **9** und den Generator **10** übernimmt und insoweit die gesamte Anordnung komplex steuert.

Bei einer Ausführung der Anordnung mit einer Brennkraftmaschine 9 als Antrieb kann auch eine direkte Kopplung derselben zum Ventilator 1, 17 erfolgen. Die Steuerung **3, 19** wirkt in diesen Fall auf die Brennkraftmaschine **9** ein und steuert diese. Diese Ausführungsform ist nicht Teil der Erfindung.

### Bezugszeichenliste

1 Ventilator
2 elektrischer Antrieb
3 Steuerung
4 Sensor
5 Strömungskanal
6 Massestrom
7 Leistungselektronischer Baustein
8 Sauggut
9 Brennkraftmaschine
10 Generator
11 Energiespeicher
12 Leitung
13 Saugrohr
14 Stoff
15 Fallrohr
16 Auffangbehälter
17 Ventilator
18 elektrischer Antrieb
19 Steuerung
20 Stromversorgung
21 Energiespeicher
22 Leistung elektronischer Baustein
23 Stromversorgung
24 Leitung
25 Nennleistungskennlinie
26 Ventilatorkennlinie
27 Kennlinie

## Patentansprüche

1. Verfahren zur Beeinflussung eines durch einen Ventilator (1; 17) erzeugten Saug- oder Druckstroms in einer Anordnung, bestehend aus einem Strömungskanal (5), in dem ein mit Fremdstoffen beladener Massestrom (6) bewegt wird,
wenigstens einem Ventilator (1; 17), der mit dem Strömungskanal (5) verbunden ist, und den beladenen Massestrom (6) bewegt,
einem elektrischen Antrieb (2; 18),
einer Steuerung (3; 19),
wobei
im Strömungskanal (5) ein Sensor (4) angeordnet ist, der über eine Leitung (12) mit der Steuerung (3; 19) verbunden ist,
die Messwerte des Sensors (4) an die Steuerung (3; 19) übergeben werden, und/oder
das Drehmoment des elektrischen Antriebs (2; 18) und/oder das Drehmoment des Ventilators (1; 17)
und/oder
der Energiebedarf des elektrischen Antriebs (2; 18)
ermittelt und die Messwerte an die Steuerung (3; 19) übergeben werden, die Steuerung (3; 19) aus den Messwerten die für den Betrieb des Ventilators (1; 17) erforderlichen Betriebskennwerte ermittelt
und dem elektrischen Antrieb (2; 18) die Energiemenge zur Verfügung stellt, die zur Einhaltung der Betriebskennwerte des Ventilators (1; 17) erforderlich ist,
**dadurch gekennzeichnet,**
**dass** die dem Ventilator durch die Steuerung zur Verfügung gestellte Energiemenge durch einen Generator (10) erzeugt wird,
**dass** der Generator durch eine Brennkraftmaschine (9) angetrieben wird,
und **dass** der Anordnung ein Energiespeicher (11) zugeordnet ist, und der Energiespeicher (11) mit der Steuerung (3) verbunden ist und von dieser gesteuert wird,
wobei in Phasen erhöhten Widerstands im Strömungskanal (5) durch den Generator (10) erzeugte elektrische Energie zwischengespeichert wird.

2. Verfahren nach Patentanspruch 1,
**dadurch gekennzeichnet, dass**
die Steuerung (3; 19) die zur Aufrechterhaltung der notwendigen Parameter des beladenen Massestroms (6) notwendige Energiemenge in Abhängigkeit eines Parameterverlaufs innerhalb eines Zeitintervalls und durch Vergleich mit abgespeicherten Werteverläufen ermittelt und dem elektrischen Antrieb (2; 18) die Energiemenge zur Verfügung stellt, die zur Erreichung der Betriebskennwerte des Ventilators (1; 17) erforderlich ist.

3. Verfahren nach einem der Patentansprüche 1 und 2,
**dadurch gekennzeichnet,**
**dass** die Betriebsparameter des Generators (10) und/oder der Brennkraftmaschine (9) durch die Steuerung (3; 19) beeinflusst werden.

4. Anordnung zur Durchführung des Verfahrens zur Beeinflussung eines durch einen Ventilator (1; 17) erzeugten Saug- oder Druckstroms nach Anspruch 1, bestehend aus einem Strömungskanal (5), in dem ein mit Fremdstoffen beladener Massestrom (6) bewegt wird, wenigstens einem Ventilator (1; 17), der mit dem Strömungskanal (5) verbunden ist und den beladenen Massestrom (6) bewegt, einem elektrischen Antrieb (2; 18), einer Steuerung (3; 19), und zusätzlich bestehend aus
einem im Strömungskanal (5) angeordneten Sensor (4), der über eine Leitung (12) mit der Steuerung (3; 19) verbunden ist, sodass
die Messwerte des Sensors (4) an die Steuerung (3; 19) übergeben werden können, und/oder
einem Mittel zur Messung des Drehmoments des elektrischen Antriebs (2; 18) und/oder
einem Mittel zur Messung des Drehmoments des Ventilators (1; 17) und/oder
einem Mittel zur Messung des Energiebedarfs des elektrischen Antriebs (2, 18),
wobei die Messwerte an die Steuerung (3; 19) übergeben werden können,
wobei die Steuerung dazu ausgelegt ist, aus den Messwerten die für den Betrieb des Ventilators (1; 17) erforderlichen Betriebskennwerte zu ermitteln und dem elektrischen Antrieb (2; 18) die Energiemenge zur Verfügung zu stellen, die zur Einhaltung der Betriebskennwerte des Ventilators (1; 17) erforderlich ist,
**dadurch gekennzeichnet,**
**dass** die Anordnung eine Brennkraftmaschine (9) umfasst,
**dass** die Brennkraftmaschine mit einem Generator (10) ausgerüstet ist und die für den Betrieb des Ventilators erforderliche Energie vom Generator bezogen wird,
und **dass** der Anordnung ein Energiespeicher (11) zugeordnet ist, und der Energiespeicher (11) mit der Steuerung (3) verbunden und von dieser steuerbar ist,
wobei in Phasen erhöhten Widerstands im Strömungskanal (5) durch den Generator (10) erzeugte elektrische Energie zwischengespeichert wird.

5. Anordnung nach Patentanspruch 4,
**dadurch gekennzeichnet, dass**
die Brennkraftmaschine (9) mit der Steuerung (3) verbunden und von dieser steuerbar ist.

6. Anordnung nach Patentanspruch 4,
**dadurch gekennzeichnet,**
**dass** der Generator (10) mit der Steuerung (3) verbunden und von dieser steuerbar ist.

7. Verwendung des Verfahrens zur Beeinflussung eines durch einen Ventilator erzeugten Saugstroms nach einem der Patentansprüche 1 bis 3 und der Anordnung zur Durchführung des Verfahrens nach einem der Ansprüche 4 bis 6 in einem Saugbagger.

## Claims

1. Method for influencing a suction or pressure flow generated by a fan (1; 17) in an arrangement comprising
a flow channel (5) in which a mass flow (6) loaded with foreign substances is moved,
at least one fan (1; 17) which is connected to the flow channel (5) and moves the loaded mass flow (6),
an electric drive (2; 18),
a control system (3; 19), wherein
a sensor (4) is arranged in the flow channel (5) and is connected to the control (3; 19) via a line (12),
the measured values of the sensor (4) are transmitted to the control (3; 19),
and/or
the torque of the electric drive (2; 18) and/or the torque of the fan (1; 17)
and/or
the energy requirement of the electric drive (2; 18)
are determined and the measured values are transferred to the controller (3; 19), the controller (3; 19) determines from the measured values the operating characteristic values required for the operation of the fan (1; 17)
and provides the electric drive (2; 18) with the amount of energy which is required to maintain the operating characteristic values of the fan (1; 17),
**characterised in that**
the amount of energy made available to the fan by the control system is generated by a generator (10),
that the generator (10) is driven by an internal combustion engine (9), and that
an energy storage device (11) is associated with the arrangement, and the energy storage device (11) is connected to the control system (3) and is controlled by the latter,
wherein electrical energy generated by the generator (10) is temporarily stored in phases of increased resistance in the flow channel (5).

2. Method according to claim 1,
**characterised in that**
the control (3; 19) determines the amount of energy required to maintain the necessary parameters of the loaded mass flow (6) as a function of a parameter curve within a time interval and by comparison with stored value curves and makes available to the electric drive (2; 18) the amount of energy required to achieve the operating characteristic values of the fan (1; 17).

3. Method according to one of the claims 1 and 2,
**characterised**
**in that** the operating parameters of the generator (10) and/or of the internal combustion engine (9) are influenced by the control system (3; 19).

4. Arrangement for carrying out the method for influencing a suction or pressure flow generated by a fan (1; 17) according to claim 1, consisting of
a flow channel (5) in which a mass flow (6) loaded with foreign substances is moved,
at least one fan (1; 17) which is connected to the flow channel (5) and moves the loaded mass flow (6),
an electric drive (2; 18),
a control system (3; 19),
and additionally consisting of
a sensor (4) arranged in the flow channel (5), which is connected to the control (3; 19) via a line (12), so that the measured values of the sensor (4) can be transferred to the control (3; 19),
and/or
a means for measuring the torque of the electric drive (2; 18)
and/or
a means for measuring the torque of the fan (1; 17)
and/or
a means for measuring the energy requirement of the electric drive (2; 18), wherein
the measured values can be transmitted to the controller (3; 19), the controller (3; 19) being designed to determine from the measured values the operating characteristic values required for the operation of the fan (1; 17)
and to make available to the electric drive (2; 18) the amount of energy which is required to maintain the operating characteristic values of the fan (1; 17), **characterized in that**
the arrangement comprises an internal combustion engine (9),
**in that** the internal combustion engine (9) is equipped with a generator (10) and the energy required for operating the fan is obtained from the generator, and **in that**
an energy storage device (11) is associated with the arrangement, and the energy storage device (11) is connected to the control system (3) and can be controlled by the latter,
wherein electrical energy generated by the generator (10) is temporarily stored in phases of increased resistance in the flow channel (5).

5. Arrangement according to claim 4,
**characterised in that**
the internal combustion engine (9) is connected to the control unit (3) and can be controlled by the latter.

6. Arrangement according to patent claim 4,
**characterised in that**
**in that** the generator (10) is connected to the control unit (3) and can be controlled by the latter.

7. Use of the method for influencing a suction flow generated by a fan according to one of the patent claims 1 to 3 and of the arrangement for carrying out the method according to one of the claims 4 to 6 in a suction excavator.

## Revendications

1. Procédé pour influencer un écoulement d'aspiration ou de pression généré par un ventilateur (1; 17) dans un agencement constitué
d'un canal d'écoulement (5) dans lequel est déplacé un flux massique (6) chargé de matières étrangères,
d'au moins un ventilateur (1 ; 17) qui est relié au canal d'écoulement (5) et déplace le flux massique chargé (6),
d'un entraînement électrique (2 ; 18),
d'une commande (3 ; 19),
dans lequel
un capteur (4) est disposé dans le canal d'écoulement (5), qui est relié à la commande (3 ; 19) par une ligne (12),
les valeurs de mesure du capteur (4) sont transmises à la commande (3 ; 19), et/ou le couple de l'entraînement électrique (2 ; 18) et/ou le couple du ventilateur (1 ; 17)
et/ou
le besoin en énergie de l'entraînement électrique (2 ; 18)
sont déterminés et les valeurs mesurées sont transmises à la commande (3 ; 19), la commande (3 ; 19) détermine à partir des valeurs mesurées les valeurs caractéristiques de fonctionnement nécessaires pour le fonctionnement du ventilateur (1 ; 17) et met à la disposition de l'entraînement électrique (2 ; 18) la quantité d'énergie nécessaire pour respecter les valeurs caractéristiques de fonctionnement du ventilateur (1 ; 17)
**caractérisé en ce**
**que** la quantité d'énergie fournie au ventilateur par la commande est produite par un générateur (10),
**que** le générateur est entraîné par un moteur à combustion interne (9) et
**qu'**un accumulateur d'énergie (11) est associé à l'agencement, et l'accumulateur d'énergie (11) est relié à la commande (3) et commandé par celle-ci,
l'énergie électrique produite dans le canal d'écoulement (5) par le générateur (10) étant stockée temporairement dans des phases de résistance accrue.

2. Procédé selon la revendication 1,
**caractérisé en ce que**
la commande (3; 19) détermine la quantité d'énergie nécessaire pour maintenir les paramètres nécessaires du flux massique chargé (6) en fonction d'une courbe de paramètres d'un intervalle de temps et par comparaison avec des courbes de valeurs mémorisées, et met à la disposition de l'entraînement électrique (2 ; 18) la quantité d'énergie nécessaire pour atteindre les valeurs caractéristiques de fonctionnement du ventilateur (1 ; 17).

3. Procédé selon l'une des revendications 1 et 2,
**caractérisé en ce**
**que** les paramètres de fonctionnement du générateur (10) et/ou du moteur à combustion interne (9) sont influencés par la commande (3 ; 19).

4. Agencement de mise en oeuvre dudit procédé
pour influencer un écoulement d'aspiration ou de pression généré par un ventilateur (1 ; 17) selon la revendication 1, constitué
d'un canal d'écoulement (5) dans lequel un flux massique (6) chargé de matières étrangères est déplacé
d'au moins un ventilateur (1 ; 17), qui est relié au canal d'écoulement (5) et qui déplace le flux massique chargé (6),
d'un entraînement électrique (2 ; 18),
d'une commande (3 ; 19),
et constitué en outre
d'un capteur (4) disposé dans le canal d'écoulement (5), qui
est relié à la commande (3 ; 19) par une ligne (12), de sorte que
les valeurs de mesure du capteur (4) peuvent être transmises à la commande (3 ; 19), et/ou
d'un moyen de mesure du couple de l'entraînement électrique (2 ; 18) et/ou
d'un moyen de mesure du couple du ventilateur (1 ; 17)
et/ou
d'un moyen de mesure du besoin en énergie de l'entraînement électrique (2, 18),
les valeurs de mesure pouvant être transmises à la commande (3 ; 19),
la commande étant conçue pour déterminer,
à partir des valeurs de mesure, les valeurs caractéristiques de fonctionnement nécessaires au fonctionnement du ventilateur (1 ; 17)
et pour mettre à la disposition de l'entraînement électrique (2 ; 18) la quantité d'énergie nécessaire au maintien des valeurs caractéristiques de fonctionnement du ventilateur (1 ; 17),
**caractérisé en ce**
**que** l'agencement comprend un moteur à combustion interne (9),
**que** le moteur à combustion interne est équipé d'un générateur (10) et l'énergie nécessaire au fonctionnement du ventilateur est prélevée sur le générateur,
et **qu'**un accumulateur d'énergie (11) est associé à l'agencement, et l'accumulateur d'énergie (11) est relié à la commande (3) et peut être commandé par celle-ci,
l'énergie électrique produite dans le canal d'écoulement (5) par le générateur (10) étant stockée temporairement dans des phases de résistance accrue.

5. Agencement selon la revendication 4,
**caractérisé en ce que**
le moteur à combustion interne (9) est relié à la commande (3) et peut être commandé par celle-ci.

6. Agencement selon la revendication 4,
**caractérisé en ce**
**que** le générateur (10) est relié à la commande (3) et peut être commandé par celle-ci.

7. Utilisation dudit procédé pour influencer un écoulement d'aspiration généré par un ventilateur selon l'une des revendications 1 à 3
et
de l'agencement de mise en œuvre dudit procédé selon l'une des revendications 4 à 6 dans une drague suceuse.
